# EUROPEAN PATENT APPLICATION

(11) **EP 3 225 104 A1**
(43) Date of publication of application: **04.10.2017**
(21) Application number: 16162644.5
(22) Date of filing: 29.03.2016
(51) Int. Cl.: A01K 1/00, A01K 1/02

(54) **ANIMAL SHELTER**

(71) Applicant: David Ritchie (Implements) Limited, Forfat, Angus DD8 3BT (GB)
(72) Inventor: Ritchie, Robert, Forfar, Angus DD8 3BT (GB); Edwards, Andrew R., Forfar, Angus DD8 3BT (GB); Harcombe, James, Forfar, Angus DD8 3BT (GB); McGregor, Jonathan, Forfar, Angus DD8 3BT (GB)
(74) Representative: Newell, Campbell

(57) **Abstract**

A portable shelter (1) for pigs comprises a roofed (10) and walled (2, 4, 6, 8) enclosure. The roofed and walled enclosure has first (28) and second chambers (30) separated by a wall (26) including a doorway (36) having a barrier (37) to prevent young piglets passing there through. The first chamber is for use in farrowing and suckling piglets and the second chamber is provided with feeding (40) and drinking (44) facilities for an adult pig, and is provided with an exit (16) from the shelter.

## Description

### Field of the invention

The present invention is directed to the provision of portable animal shelters, in particular portable animal shelters for use in farrowing and suckling piglets.

### Background to the Invention

Pigs are often reared indoors in intensive farming operations.

As an alternative pigs are reared in outdoor conditions where they may be free to roam at least during part of their life cycle. Where pigs are reared outdoors, protection of the piglets from the weather, especially cold and wet weather is required to avoid excessive mortality rates.

For these reasons sows giving birth to and rearing piglets are provided with shelter. For example a sow may be provided with a fixed shelter for farrowing. However, to rear a relatively large number of pigs on farmland, portable shelters, sometimes known as "pig arks" are used. These portable shelters can be moved from place to place. After the land around an ark is damaged by the natural activities of the pigs, it may be moved to a new location in the field, or to a new field.

Known pig arks are generally simple shed like structures where piglets can be born and suckled by their parent sow. They may be provided with a barrier to prevent piglets escaping, at least when very young.

However, improvements in welfare and thus economic benefits remain desirable in pig farming.

### Description of the Invention

According to a first aspect the present invention provides a portable shelter for pigs comprising a roofed and walled enclosure; the roofed and walled enclosure comprising first and second chambers separated by a wall including a doorway having a barrier to prevent young piglets passing there through; wherein the first chamber is for use in farrowing and suckling piglets and the second chamber is provided with feeding and drinking facilities for an adult pig and is provided with an exit from the shelter.

Control of the temperature is important both in warm weather and cold weather, not only for the comfort of the animals but to avoid health problems and even death. For these reasons the portable shelter may be provided with at least one of: an opening roof; opening doors or parts of doors; or other adjustable vents to allow air circulation to cool the interior of the shelter. At the same time the walls and/or roof of the portable shelter are typically of an insulating material.

For example the walls of the portable shelter may be of a polyurethane plastics material, and may include insulating material such as an insulating foam material.

For example the roof may be of a relatively thin flexible sheet material such as a cloth material. This tarpaulin type roof may be releasably attached to a roof frame of the portable shelter to allow part or all of the flexible sheet material to be drawn back or removed in use of the portable shelter to allow passage of air and/or to allow heat from the sun to bear directly on at least a part of the shelter. More generally one or more panels or parts of panels of the roof may open or be removable to provide increased ventilation when required. Similarly one or more panels or parts of panels of the walls may open or be removable to provide increased ventilation when required.

The portable shelter includes an exit from the second chamber; this exit may be provided with a door or other closure panel. The door or other closure panel may be provided with ventilation openings or be replaceable with a ventilation grille for example.

Whilst good ventilation is desirable in warm weather, cold weather can be especially harmful to the young piglets. For this reason the first chamber may be provided with more thermal insulation than the second. The additional insulation can be provided in the walls and/or floor. Conveniently the first chamber may be provided with a ceiling, below the roof, to further insulate the farrowing and suckling space. The shelter is not normally provided with flooring, both first and second chambers make use of the ground as a floor. However flooring or partial flooring may be provided in one or both of the first and second chambers is desired.

The size of the first and second chambers may be chosen to suit the size of pigs and litter size expected. For typical European pigs each of the first and second chambers may be of the order of 2m by 2m, giving a general plan area of about 4m by 2m to the portable shelter. Conveniently and as shown in more detail hereafter the portable shelter may be supplied with a curved, for example a part cylinder, roof.

The portable shelter has a barrier in the doorway between the two chambers to prevent young pigs passing there through. The barrier may be provided as a simple bar or plank that can be releasably attached across the doorway. However, the doorway may conveniently include a fixed barrier. The fixed barrier may be in the form a raised sill, over which a sow can step and over which the piglets can step only when sufficiently grown.

The raised sill may conveniently be a part of the wall dividing the two chambers. Thus the doorway may be an aperture formed in the wall at a selected height above the ground.

The doorway between the first and second chambers may be provided with a door. Advantageously, the door is operable from outside the shelter.to allow opening and closing without a pig keeper having to enter the shelter. Conveniently the door is sliding. Conveniently the door is sliding and operated by means of a handle member such as an elongate bar extending to outside the shelter.

The barrier may typically provide a height of from 70mm to 130mm, for example from 90 to 110mm for step over. This confines the piglets to the first chamber, typically until they are about 2 weeks old. Thereafter the piglets may move between the first and second chambers until weaned (typically until 3 to 5 weeks old). The weaned piglets are then generally transferred from the shelter.

The barrier confines the young piglets to the first chamber until they have grown sufficiently to step over it. Thus young vulnerable piglets are kept in the first chamber which advantageously has additional insulation. At the same time the second chamber is provided with feeding and drinking facilities for the adult pig (sow). As the young piglets remain in the first chamber, the risk of trampling by the adult when feeding or drinking is removed.

The portable shelter includes an exit door from the second chamber; this door may also be provided with a barrier in the same way as the doorway between the first and second chambers.

The portable shelter may also be provided with an access panel to the first chamber. This may be a hinged access panel. The access panel may be kept closed by releasable fixings such as bolts or latches to prevent piglets and/or sow escaping. The panel may hinge upwards to allow easy entry of personnel such as pig keepers or a vet when intervention is required.

The second chamber is provided with feeding and drinking facilities for an adult pig. These are conveniently made accessible from outside the shelter so that they may be replenished as required without the pig keeper having to enter the shelter. The feeding facility may be in the form of a hopper or box, filled from an elevated access opening on an outside wall of the shelter and having an access opening at low level inside the shelter from where the sow may obtain the food. The low level access opening for feeding may be at a suitable height from the ground to prevent access by young piglets, should they escape from the first chamber.

Similarly the drinking facilities are arranged to allow the sow to access drink (usually water) but will typically have access at a raised height above the ground to prevent piglets entering the water and drowning. Advantageously the drinking facility includes a reservoir of drink (e.g. water) that is topped up automatically as it is drunk. For example the well-known ballcock and valve type arrangement. Whilst such a reservoir may be fed from a pipe connecting directly to the reservoir an advantageous arrangement is to provide a tank or similar buffer supply inside the shelter or attached externally to the shelter wall. The tank holds a reserve supply of water that is available to the reservoir, even if supply from a pipe is interrupted.

Temperature control and avoiding draughts are important principles in good husbandry of pigs. As mentioned herein various openings such as doorways, panels and the exit are openable and/or may have adjustable ventilation. For example by fitting or removal of a panel, sliding opening and closing of a door or the provision of a grille or louvered openings, that may be adjustable to provide more or less ventilation.

Conveniently, as described hereafter with reference to a particular embodiment the shelter may comprise two chambers forming a generally rectangular, in plan, shelter. The exit from the shelter is on an end wall (on the short side) of the rectangle that is opposite the wall separating the first and second chambers. Desirably the exit and the doorway in the wall separating the chambers are not directly opposite each other. Such an arrangement can allow wind to blow directly into the first chamber, perhaps compromising the temperature of the young piglets. Therefore it is preferred that the doorway between the first and second chambers and the exit from the shelter are offset, to prevent wind blowing directly into the first chamber from the exit.

The advantages of the portable shelter of the invention include the economic benefits of decreased piglet mortality from temperature issues and also from trampling by a feeding or drinking adult.

In trials a total of 89 sows were farrowed, 80 in traditional pig shelters ("pig arks") and 9 in shelters in accordance with the invention. For the traditional pig shelters an average of 10.7 piglets were born per sow and 9.1 piglets were successfully weaned per sow. For the shelters of the invention 11.4 piglets were born per sow (+6.5%) and 9.9 piglets were successfully weaned per sow (+8.8%). These results demonstrate a clear advantage over the traditional pig shelters.

The shelter of the invention is portable. To allow easy movement it is conveniently provided with lifting points, for example loops or hooks to allow lifting of the whole unit.

The portable shelter allows a pig rearing operation to be carried out in a field in an effective and efficient manner. Typically a row of portable shelters of the invention are laid in a line across a field. Temporary fencing such as electric fencing is normally used to ensure that adult sows do not stray far from their shelter, even if the exit is not always kept closed. The field where the shelters are placed inevitably becomes damaged by the natural activities of the pigs. Therefore when desired the line of pig shelters and associated fencing, if employed, is moved across the field to a fresh, relatively undisturbed area where pig rearing can continue.

Thus the present invention also provides a method of rearing pigs comprising farrowing and suckling pigs in a portable shelter of the invention as described herein.

### Brief Description of the Drawings

Figures 1a to 1d show schematic views of a portable shelter for farrowing and sucking piglets;
Figure 2a shows the shelter of figures 1 in schematic plan view;
Figure 2b shows a side elevation cross section view along line AA of figure 2a; and
Figure 2c shows an end elevation cross section view along line BB of figure 2a.

### Detailed Description of the Invention

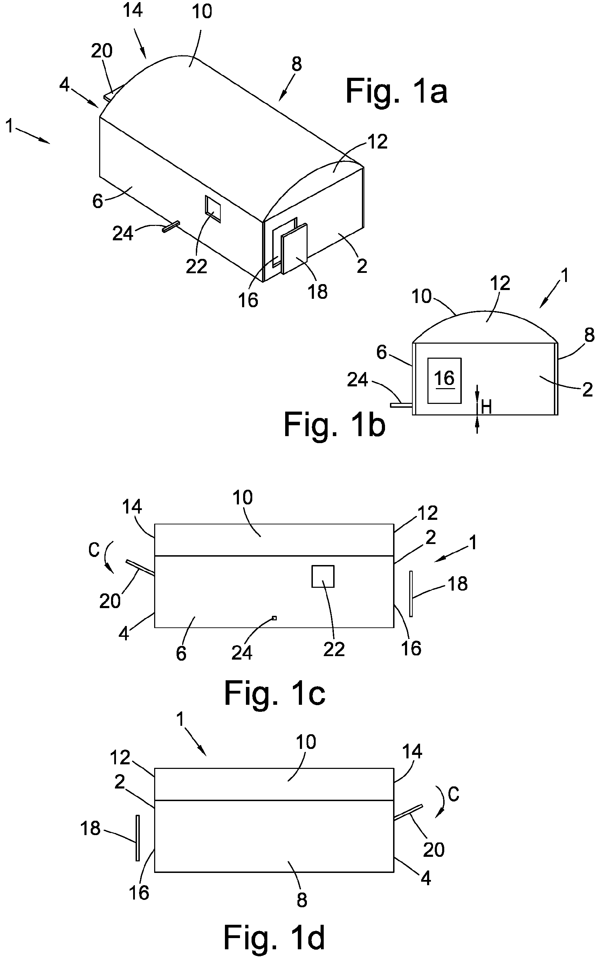

In figure 1 a a portable shelter 1 is shown in schematic perspective view. Figure 1 b shows a front elevation and figures 1c and 1d show left and right side elevations respectively. The shelter 1 is generally rectangular in plan with end walls 2,4 and side walls 6,8. The walls 2,4,6,8 may be made of made of polyurethane or other suitable polymer material.

The roof 10 is part cylinder in form to provide easy construction and shedding of rainwater. The roof 10 may be of a textile material mounted on hoops and may be removable or partly removable for ventilation purposes. Alternatively the roof 10 may be of a more rigid material such as a rigid plastic sheeting. The roof 10 may have removable panels on its main surface (not shown in this embodiment) to allow ventilation.

In this example end panels 12, 14 of the roof are removable for increased ventilation, especially in warmer weather.

At the front end 2 of the shelter 1 and exit 16 in the form of an aperture in wall 2 is provided. As can be seen most easily in figure 1b the aperture is at a height H above ground that will prevent young piglets escaping.

Exit 16 may be closed by fitting releasable closure panel 18 when required. Panel 18 may be provided with ventilation. For example a grille that may be covered by a sheet when not required. For further example adjustable louvers may be fitted to the panel 18.

A hinged panel 20, shown in the open position, allows access though an aperture in the rear wall 4 of the shelter. The hinged panel 20 may be moved to the closed position as suggested by arrow C (figures 1c and 1d) and held closed by suitable latch or locking arrangements.

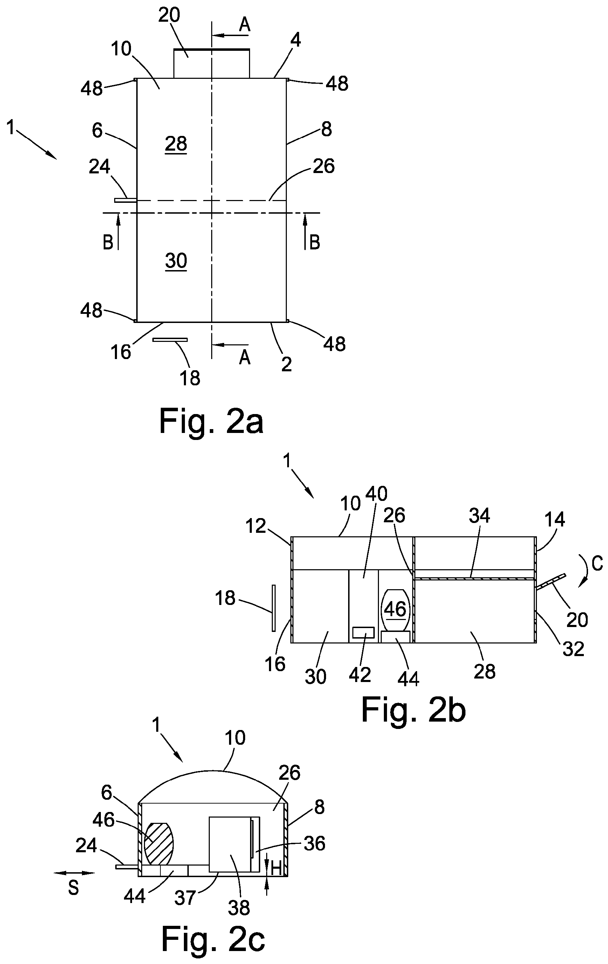

An aperture 22 on side wall 6 allows access to feeding and drinking facilities as discussed further below with respect to figures 2. Also visible in figures 1a, 1b and 1c is a sliding bar 24.discussed further below with respect to figures 2.

Figure 2a shows the shelter of figures 1 in plan view. Cross section elevation along line A-A is shown in figure 2b and cross section elevation along line B-B is shown in figure 2c. As can be seen in these figures the interior of the shelter 1 is divided by a wall 26 (indicated by dashed line in figure 2a) into two chambers 28, 30.

First chamber 28 is for farrowing and suckling pigs. it includes access panel 20 to allow intervention via an aperture 32 (figure 2b) by a pig keeper or vet if required. Normally aperture 32 is covered by panel 20 in a closed position. Also provided in first chamber 28 is an insulated ceiling 34, which may be of the same material as the walls 2,4,6,8. Ceiling 34, below roof 10 provides additional insulation to the first chamber, to protect young piglets.

Access between first chamber 28 and second chamber 30 is via doorway 36 (figure 2c) which is offset from being directly opposite exit 18. Doorway 36 is an aperture in wall 26 at a height H above the ground to prevent passage of young piglets. The height of the doorway 36 above the ground means that it has a raised sill 37. Doorway 36 can be closed by door 38 operated from outside the shelter by bar 24 as suggested by double headed arrow S in figure 2c.

Second chamber 30 is provided with feed hopper 40 having low level opening 42 to allow the sow to feed. Drinking reservoir 44 is supplied from tank 46 and kept topped up by a valve and ballcock arrangement (not shown). Tank 46 may in turn be supplied by a hose arrangement from outside. Access to the feed hopper and to the drinking arrangements is available via aperture 22 (figures 1a, 1c).

Exit from the shelter for the sow from second chamber 30 is via exit 16, if allowed by removal of panel 18.

The shelter 1 is also fitted with lifting loops 48 at each roof corner (shown only on figure 2a) to allow easy transport to a new location.

The shelter 1 therefore allows farrowing and sucking of piglets in the first chamber 28 in an insulated environment with ventilation control. Access for human intervention is provided by panel 20 on aperture 32. Young piglets are prevented from escaping the first chamber 28 by the barrier provided by raised sill 37. The sow may make use of second chamber 30 for feeding and drinking, without risk of trampling piglets as they are confined, at least when young, to the first chamber 28. The sow may exit the second chamber 30 to roam further if desired by the pig keeper. The sow may be confined to the first and second chambers by fitting panel 18 as and when desired. For example, at night to avoid risk from predators. The piglets may be isolated from the sow by making use of sliding door 38, in doorway 36.

## Claims

1. A portable shelter for pigs comprising a roofed and walled enclosure;
the roofed and walled enclosure comprising first and second chambers separated by a wall including a doorway having a barrier to prevent young piglets passing there through;
wherein the first chamber is for use in farrowing and suckling piglets and the second chamber is provided with feeding and drinking facilities for an adult pig and is provided with an exit from the shelter.

2. The portable shelter of claim 1 wherein the first and second chambers form a generally rectangular, in plan, shelter and the exit from the shelter is on an end wall of the rectangle that is opposite the wall separating the first and second chambers.

3. The portable shelter of claim 1 or claim 2 wherein the exit and the doorway in the wall separating the first and second chambers are not directly opposite each other.

4. The portable shelter of any preceding claim provided with at least one of:
an opening roof; opening doors or parts of doors; or other adjustable vents to allow air circulation to cool the interior of the shelter.

5. The portable shelter of any preceding claim wherein the roof is part cylinder in form.

6. The portable shelter of any preceding claim wherein the roof is of a relatively thin flexible sheet material such as a cloth material.

7. The portable shelter of any preceding claim wherein the exit from the second chamber is provided with a closure panel.

8. The portable shelter of any preceding claim wherein the exit from the second chamber is provided with a barrier to prevent young piglets passing there through.

9. The portable shelter of any preceding claim wherein the first chamber is provided with more thermal insulation than the second.

10. The portable shelter of any preceding claim wherein the first chamber is provided with a ceiling, below the roof, to further insulate the farrowing and suckling space.

11. The portable shelter of any preceding claim wherein the doorway between the first and second chambers is provided with a door that is operable from outside the shelter.

12. The portable shelter of claim 11 wherein the door is sliding and operated by means of a handle member such as an elongate bar extending to outside the shelter.

13. The portable shelter of any preceding claim further comprising an access panel providing access to the first chamber from outside the shelter.

14. The portable shelter of any preceding claim wherein a least one of the feeding and drinking facilities for an adult pig are accessible for replenishment from outside the shelter.

15. A method of rearing pigs comprising farrowing and suckling pigs in a portable shelter according to any one of claims 1 to 14.
